# FASCICULE DE BREVET EUROPEEN

(11) **EP 2 836 155 B1**
(45) Date de publication et mention de la délivrance du brevet: **26.06.2019**
(21) Numéro de dépôt: 13719992.3
(22) Date de dépôt: 10.04.2013
(51) Int. Cl.: A61C 7/14, A61C 7/00

(54) **Procédé de fabrication d'un dispositif de collage d'attaches orthodontiques**
Verfahren zur Herstellung einer orthodontischen Bracket-Befestigungsvorrichtung
Method of Manufacturing an Orthodontic Bracket Bonding Device

(30) Priorité: 10.04.2012 FR 1201052
(43) Date de publication de la demande: 18.02.2015
(73) Titulaire: SELARL de Chirurgien Dentiste du Docteur Moreau Spécialiste Qualifié en Orthopdie Dento-Faciale, 59000 Lille (FR)
(72) Inventeur: MOREAU, Alexis, F-59000 Lille (FR)
(74) Mandataire: Cabinet Rifflart Vandenbossche
(86) Numéro de dépôt international: PCT/FR2013/050772
(87) Numéro de publication internationale: WO 2013/153325

(56) Documents cités:
- WO-A1-2010/091832
- US-A1- 2010 190 125

## Description

La présente invention concerne un dispositif de collage d'attaches orthodontiques ainsi qu'un procédé de fabrication d'un dispositif de collage d'attaches orthodontiques. Un tel dispositif de collage d'attaches orthodontiques trouve son application pour le collage indirect des attaches orthodontiques sur les dents constitutives d'une arcade dentaires. On entend par « indirect » le fait que le positionnement des attaches orthodontiques sur les dents a été défini préalablement à la phase clinique.

Traditionnellement en effet, à l'inverse de la méthode indirecte, le praticien orthodontiste peut utiliser la méthode directe consistant à procéder au collage des attaches orthodontiques une à une directement sur les dents du patient, en définissant dans le même temps, durant cette phase clinique, la position de chacune des attaches sur les dents respectives. Cette méthode directe présente de nombreux inconvénients parmi lesquels on peut citer la durée importante du rendez-vous, l'imprécision du collage des attaches orthodontiques sur les dents et une ergonomie aléatoire.

La méthode indirecte permet de pallier ces inconvénients précités.

Divers dispositifs de collage d'attaches orthodontiques sont connus de l'homme du métier, tels que ceux décrits dans les demandes de brevet publiées sous les numéros FR 2 918 556 A1, WO 2007/069881 A1, JP 10 258070 A, EP 1 769 772 A2 et dans le modèle d'utilité publié sous le numéro DE 20 2010 008 337 U1. Un tel dispositif de collage d'attaches orthodontiques comprend une gouttière de transfert et des clips. La gouttière de transfert comporte le négatif de la partie occlusale des dents du patient. Les clips sont assemblés au niveau de leurs extrémités proximales avec la gouttière de transfert et, sont assemblés au niveau de leurs extrémités distales avec les attaches respectives devant être collées sur les dents du patient.

Les dispositifs de collage d'attaches orthodontiques mis en oeuvre dans les documents JP 10 258070 A, EP 1769 772 A2 et DE 20 2010 008 337 U1, nécessitent le recours à une phase laboratoire complexe, faite de multiples étapes telles que la réalisation d'une empreinte de l'arcade dentaire du patient, la coulée d'un modèle en plâtre de l'arcade dentaire, l'isolation du modèle, le collage des attaches orthodontiques sur le modèle, la fabrication de la gouttière de transfert. Par ailleurs, la précision dans le placement des attaches sur le modèle en plâtre dépend de l'opérateur en charge du collage des attaches orthodontiques sur ledit modèle en plâtre, placement que l'orthodontiste ne pouvait pas vérifier.

Les dispositifs de collage d'attaches orthodontiques selon les documents FR 2 918 556 A1 et WO 2007/069881 A1 sont conçus à partir des données virtuelles de l'arcade dentaire du patient, ces données virtuelles permettant notamment de mettre en oeuvre la gouttière de transfert comportant le négatif de l'arcade dentaire et, de positionner virtuellement les attaches sur l'arcade dentaire virtuelle. Le dispositif de collage d'attaches orthodontiques selon le document FR 2 918 556 A1 présente pour inconvénient majeur de ne pouvoir être mis en oeuvre que pour une dent ou un groupe de quelques dents. Il est donc nécessaire de mettre en oeuvre plusieurs dispositifs de collage d'attaches orthodontiques afin de coller des attaches sur toutes les dents de l'arcade dentaire du patient, ce qui augmente considérablement le temps clinique de pose des attaches orthodontiques. Le dispositif de collage d'attaches orthodontiques selon le document WO 2007/069881 A1 permet de pallier cet inconvénient précité du dispositif de collage d'attaches orthodontiques selon le document FR 2 918 556 A1 puisqu'il présente une gouttière globale sur laquelle sont montés en liaison pivot les extrémités proximales de clips qui reçoivent au niveau de leurs extrémités distales des attaches orthodontiques. Ainsi, ce dispositif de collage d'attache orthodontique selon WO 2007/069881 A1 permet d'effectuer un positionnement de toutes les attaches orthodontiques à proximité des dents en positionnant la gouttière globale sur les portions occlusales de ces dents, ce qui permet de réduire le temps de pose des attaches orthodontiques. Ce dispositif de collage d'attaches orthodontiques selon WO 2007/069881 A1 présente cependant pour inconvénient de nécessiter une conception sur mesure de tous les clips permettant l'assemblage des attaches orthodontiques à la gouttière de transfert.

Il est aussi connu les demandes de brevet publiées sous les numéros US 2010/190125 A1 et WO 2010/091832 A1 qui mettent en oeuvre également une méthode indirecte de collage des attaches orthodontiques sur des dents. Comme dans les demandes de brevet FR 2 918 556 A1 et WO 2007/069881 A1, ces méthodes exploitent les données virtuelles de l'arcade dentaire du patient pour le positionnement virtuel des attaches sur les dents et la conception d'un dispositif de collage d'attaches orthodontiques.

Dans US 2010/190125 A1, le dispositif de collage d'attaches orthodontiques est constitué de gouttières unitaires spécifiques aux dents respectives de l'arcade dentaire. Chaque gouttière unitaire à la forme d'un bloc plus ou moins cubique dont la face inférieure comprend le négatif de la portion occlusale de la dent sur laquelle ladite face inférieure est positionnée lors du collage de l'attache orthodontique. Des clips sont assemblés en liaison pivot à leurs extrémités proximales avec les faces avant des gouttières unitaires respectives. Ces clips sont également assemblés en liaison encastrement amovible à leurs extrémités distales, avec les attaches orthodontiques respectives. La position des attaches orthodontiques sur l'arcade dentaire virtuelle définie la position des clips et, par conséquent, la position de toutes les gouttières unitaires et la configuration des négatifs sur ces gouttières unitaires. Un inconvénient majeur du dispositif de collage d'attaches orthodontiques selon US 2010/190125 A1 est qu'il convient de positionner chaque gouttière unitaire une par une sur chaque portion occlusale de l'arcade dentaire, comme pour la demande de brevet FR 2 918 556 A1, ce qui augmente considérablement le temps de pose des attaches orthodontiques.

Dans WO 2010/091832 A1, le dispositif de collage d'attaches orthodontiques comprend des premiers éléments élastiques qui sont configurés pour être positionnée sur les portions occlusales des dents d'une arcade dentaire et pour recevoir en regard d'une face de ces dents, des seconds éléments élastiques. Ces seconds éléments élastiques sont configurés pour recevoir des attaches orthodontiques dans des positions permettant le collage de ces attaches orthodontiques sur ladite face des dents. Une barre de connexion est fixée au-dessus de tous les premiers éléments élastiques pour les raccorder entre eux. Cette conception selon WO 2010/091832 A1 permet d'effectuer un positionnement simultané de toutes les attaches orthodontiques sur les dents. Cette conception selon WO 2010/091832 A1 présente pour inconvénient, lors du positionnement des premiers éléments sur les portions occlusales des dents, de mettre en contact les attaches orthodontiques sur les faces des dents, avant que ces attaches orthodontiques atteignent leurs positions de collage définitives, ce qui génère un dépôt de résine servant au collage des attaches orthodontiques sur les dents, autour desdites attaches orthodontiques et, par conséquent, cause le présence d'une quantité insuffisante de résine sur l'attache orthodontique au moment de son collage dans sa position définitive. Cela peut engendrer des problèmes carieux et le décollage des attaches orthodontiques. Un autre inconvénient de ce dispositif de collage d'attache orthodontique est son encombrement important qui peut être gênant pour le patient qui doit conserver le dispositif en place sur l'arcade dentaire durant le collage des attaches orthodontiques sur les dents. En outre, le praticien peut éprouver des difficultés à mettre en place ledit dispositif dans la bouche du patient et sur les portions occlusales des dents, ce qui provoque l'inconvénient précité de dépôt de résine sur les dents autour des attaches orthodontiques.

Un premier objectif de la présente invention est de pallier les inconvénients précités des dispositifs de collage d'attaches orthodontiques de l'art antérieur et de faciliter la fabrication du dispositif de collage d'attaches orthodontiques.

Selon les dispositifs de collage d'attaches orthodontiques décrits dans les documents WO 2007/069881 A1, JP 10 258070 A et US 2010/190125 A1, les clips sont assemblés en liaison pivot sur la gouttière de transfert ou les gouttières unitaires, ces liaisons pivots étant configurées pour permettre un positionnement des clips par rapport à la gouttière selon deux positions distinctes, une première position selon laquelle les attaches sont distantes des dents lorsque la gouttière est positionnée sur l'arcade dentaire et une seconde position selon laquelle les attaches sont en appui contre les dents lorsque la gouttière est positionnée sur l'arcade dentaire. Lors de la manipulation du dispositif de collage d'attaches orthodontiques, pour le positionnement de la gouttière de transfert ou des gouttières unitaires sur l'arcade dentaire du patient, le praticien peut involontairement toucher les clips et les faire pivoter de la première position vers la seconde position, ce qui nécessite de repositionner convenablement les clips dans la première position avant de mettre en place la gouttière de transfert sur l'arcade dentaire voire, si le praticien ne s'en aperçoit pas ou tardivement, peut générer le contact prématuré de certaines attaches sur les dents, avant leur collage dans leurs positions déterminées. Il en résulte que de la résine servant au collage d'une attache orthodontique peut être appliquée sur une surface d'une dent plus importante que celle nécessaire au collage précis de ladite attache sur ladite dent, ce qui peut postérieurement générer une imprécision dans le collage et, le cas échéant, un défaut de collage pouvant conduire à la perte de l'attache orthodontique ou à l'apparition d'un phénomène carieux.

Un second objectif de la présente invention est de pallier cet inconvénient des dispositifs de collage d'attaches orthodontiques selon les documents WO 2007/069881 A1, JP 10 258070 A et US 2010/190125 A1.

A ce titre, l'invention concerne tout d'abord un dispositif de collage d'attaches orthodontiques sur une arcade dentaire qui, comme dans le document WO 2007/069881 A1, comprend des clips et une gouttière globale de transfert, ce qui permet d'effectuer un positionnement de toutes les attaches orthodontiques à proximité des dents en positionnant la gouttière globale sur les portions occlusales de ces dents, ce qui permet de réduire le temps de pose des attaches orthodontiques. En outre, à la différence de l'art antérieur connu, l'invention permet de standardiser les clips en fonction des attaches orthodontiques et de limiter l'encombrement dudit dispositif de collage d'attaches orthodontique en sorte de faciliter sa mise en place dans la bouche du patient par le praticien et de réduire la gêne du patient qui doit conserver ledit dispositif en bouche durant le collage des attaches orthodontiques.

Selon l'invention, des premiers moyens d'assemblage sont agencés au niveau des parties distales des clips. Ces premiers moyens d'assemblage sont configurés spécifiquement aux attaches orthodontiques respectives pour assembler temporairement selon une orientation prédéfinie les clips et les attaches respectives. Cet assemblage selon une orientation prédéfinie a pour effet de pouvoir standardiser la conception des premiers moyens d'assemblage sur le clip en fonction de la conception de l'attache qui dispose de moyens d'assemblage complémentaires à ceux du clip, chaque attache étant en outre spécifique à un type de dent bien précis.

En outre, selon l'invention, la gouttière globale de transfert est constituée de gouttières unitaires de transfert, spécifiques aux dents de l'arcade dentaire, lesdites gouttières unitaires comprenant chacune une portion centrale et deux portions latérales. Des seconds moyens d'assemblage sont agencés entre les portions centrales et les parties proximales des clips respectifs. Ces seconds moyens d'assemblage sont configurés pour orienter de manière prédéfinie les gouttières unitaires par rapport aux clips respectifs. Cet assemblage selon une orientation prédéfinie permet également de standardiser la conception des seconds moyens d'assemblage entre la gouttière unitaire et le clip, lesquels peuvent être identique pour tous les clips, quelques soient les attaches orthodontiques qu'ils sont destinés à recevoir.

En outre, selon l'invention, les portions centrales des gouttières unitaires comprennent des négatifs des portions occlusales des dents respectives. Ces négatifs sont configurés pour maintenir les gouttières unitaires dans des orientations spécifiques selon lesquelles les clips respectifs sont convenablement positionnés vis-à-vis des dents. Ainsi les attaches orthodontiques seront disposées convenablement pour leur collage sur les dents. On comprend que ces configurations des négatifs sur les portions centrales des gouttières unitaires sont conditionnées par les orientations prédéfinies entre les attaches orthodontiques et les clips et entre les clips et les portions centrales des gouttières unitaires.

En outre, selon l'invention, les portions latérales attenantes des gouttières unitaires adjacentes sont interconnectées entre elles dans leurs parties communes en sorte de constituer ladite gouttière globale de transfert. Ainsi, les orientations prédéfinies entre les attaches orthodontiques et les clips, d'une part, et entre les clips et les portions centrales des gouttières unitaires, d'autre part, sont sans incidence sur la constitution de ladite gouttière globale de transfert grâce à ces interconnexions entre les portions latérales attenantes, uniquement dans leurs parties communes.

Ainsi, la conception du dispositif de collage d'attaches orthodontiques objet de l'invention permet non seulement de conserver tous les avantages du collage indirect des attaches sur toute l'arcade dentaire en une seule opération, mais permet en outre de standardiser ses composants puisque la conception des attaches et la conception des clips sont standardisées, seule variant la conception de la gouttière de transfert qui est fonction, d'une part, des orientations des gouttières unitaires, lesquelles dépendent de la position de collage des attaches orthodontiques sur les dents du patient et, d'autre part, des négatifs des parties occlusales des dents du patient, réalisés sur les portions centrales des gouttières unitaires orientées précisément. L'interconnexion entre les parties communes de portions latérales des gouttières unitaires offre en outre une grande liberté d'orientation des portions centrales desdites gouttières unitaire, ce qui contribue à privilégier la standardisation des premiers et seconds moyens d'assemblage sur les clips, tout en évitant l'ajout d'un élément de connexion supplémentaire, tel que la barre de connexion d'écrite dans le document WO 2010/091832 A1, au-dessus desdites gouttières unitaires. En effet, un tel élément de connexion imposerait une orientation plus rigoureuse des portions centrales pour assurer leur assemblage sur ledit élément de connexion, ce qui aurait une incidence sur la standardisation des clips. En outre, un tel élément de connexion augmenterait considérablement l'encombrement du dispositif de collage d'attaches orthodontiques.

Selon une conception préférentielle du dispositif de collage d'attaches orthodontique objet de l'invention, les premiers moyens d'assemblage sont configurés pour orienter les clips dans le prolongement longitudinal des attaches respectives. Cela facilite la visualisation de la position des attaches par le praticien qui dispose des données virtuelles de l'arcade dentaire et des gouttières unitaires orientées précisément.

Selon une conception préférentielle du dispositif de collage d'attaches orthodontiques objet de l'invention, les seconds moyens d'assemblage sont configurés pour permettre un assemblage temporaire entre les parties proximales des clips et les gouttières unitaires respectives. Cela permet de rendre complètement indépendant le clip de la gouttière unitaire et ainsi, de standardiser au maximum le dispositif de collage d'attaches orthodontiques. Cette standardisation présente pour avantage d'assurer une traçabilité complète puisque seule la gouttière globale de transfert est envoyée au patient, les attaches et les clips standardisés étant fournis au préalable directement au praticien.

Car on pourrait, dans un mode de conception extrême et en fonction du mode de fabrication du dispositif de collage d'attaches orthodontiques objet de l'invention, envisager d'avoir les gouttières unitaires assemblées de manière indémontable avec leurs clips, ces gouttières unitaires munies de leurs clips étant standardisés en fonction des attaches orthodontiques qu'ils sont destinés à recevoir, chaque ensemble (gouttière unitaire et clip) étant orienté convenablement vis-à-vis des attaches orthodontiques avant de réaliser le négatif sur la portion centrale de la gouttière unitaire, et avant de joindre entre elles les portions latérales attenantes des gouttières unitaires adjacentes dans leurs parties communes, pour constituer la gouttière globale.

Selon un mode préférentiel de conception du dispositif de collage d'attaches orthodontiques objet de l'invention, les seconds moyens d'assemblage sont configurés pour permettre un positionnement des clips par rapport aux gouttières unitaires respectives selon deux positions distinctes, une première position selon laquelle les attaches sont distantes des dents lorsque la gouttière globale est positionnée sur l'arcade dentaire et une seconde position selon laquelle les attaches sont en appui contre les dents respectives lorsque la gouttière globale est positionnée sur l'arcade dentaire. Cela présente pour avantage de positionner dans un premier temps les clips dans la première position, afin de faciliter la mise en place de la gouttière globale sur l'arcade dentaire, puis seulement de déplacer les clips dans la seconde position pour le collage des attaches sur les dents.

Selon une conception préférentielle du dispositif de collage d'attaches orthodontiques objet de l'invention, dans lequel les seconds moyens d'assemblage sont configuré pour permettre un positionnement des clips par rapport aux gouttières unitaires respectives selon deux positions distinctes, tel que précité, les clips comprennent chacun dans leur partie distale une zone de préhension configurée pour faciliter son déplacement de sa première position vers sa seconde position, ou inversement. Ainsi, on facilite la manipulation des clips lors du collage des attaches orthodontiques et également lors de la séparation des clips vis-à-vis desdites attaches orthodontiques, avant le retrait de la gouttière globale.

Selon une conception préférentielle du dispositif de collage d'attaches orthodontiques objet de l'invention, au moins la gouttière globale est réalisée dans une matière configurée pour permettre le sectionnement des gouttières unitaires au niveau des parties communes de deux portions latérales attenantes interconnectées entre elles. On pourra en effet concevoir les clips dans la même matière que la gouttière globale. De préférence la gouttière globale est réalisée en matière résineuse à base de polypropylène. Cette conception facilite la séparation à postériori des gouttières unitaires correspondant à chacune des dents et donc, facilite le recollage avec précision d'une attache orthodontique qui se serait décollée en cours de traitement.

Selon une conception préférentielle du dispositif de collage d'attaches orthodontiques objet de l'invention, les clips comprennent chacun une zone de marquage configurée pour recevoir une inscription en rapport avec le type d'attache orthodontique que ledit clip est destiné à recevoir. Ainsi, le praticien distingue facilement les clips en fonction des attaches et, lorsque les clips sont détachables des gouttières unitaires, de leur position sur la gouttière globale. Cela évite tout risque d'erreur de positionnement des attaches lors de leur collage sur l'arcade dentaire.

Selon une conception préférentielle du dispositif de collage d'attaches orthodontiques objet de l'invention, les gouttières unitaires configurées pour être positionnées sur les dents multi-cuspidées - c'est-à-dire les prémolaires et les molaires - comportent une extension qui s'étend dans la direction palatine, ladite extension étant configurée pour stabiliser postérieurement la gouttière unitaire en recouvrant les cuspides.

Dans un mode de réalisation du dispositif de collage d'attaches orthodontiques objet de l'invention, les portions latérales des gouttières unitaire s'étendent transversalement par rapport aux portions centrales. Toutefois, dans une variante de réalisation du dispositif de collage d'attaches orthodontiques selon l'invention, ces portions latérales s'étendent latéralement avec des angles d'orientation ajustés vis-à-vis des portions centrales en sorte que les portions latérales attenantes de deux gouttières unitaires adjacentes soient disposées de manière coaxiale l'une par rapport à l'autre. Cela présente pour avantage de permettre une interconnexion entre les deux portions latérales attenantes sur toute leur section commune.

Selon un autre aspect, l'invention concerne un procédé de fabrication d'un dispositif de collage d'attaches orthodontiques comprenant une première étape de récupération des données virtuelles d'une arcade dentaires d'un patient. Cette récupération des données virtuelles de l'arcade dentaire peut être réalisée de diverses manières. Par exemple, le praticien prend une empreinte de l'arcade dentaire de son patient. S'il s'agit d'une empreinte optique, le travail de conception assisté peut directement commencer. S'il s'agit d'une empreinte classique, à l'alginate ou en silicone, il convient de numériser au préalable cette empreinte afin de la transférer dans un logiciel de conception assistée par ordinateur, et de disposer ainsi des données virtuelles de l'arcade dentaire. Dans une seconde étape, on procède au positionnement virtuel des attaches sur les dents de l'arcade dentaire. Les attaches orthodontiques sont alors positionnées virtuellement sur les dents en visualisant les données de l'arcade dentaire sur un écran d'ordinateur par exemple, de préférence directement par le praticien.

Selon l'invention, le procédé de fabrication consiste ensuite à positionner virtuellement des clips en fonction du positionnement virtuel des attaches et en orientant lesdits clips avec une position prédéfinie vis-à-vis desdites attaches respectives. Cela permet de standardiser les moyens d'assemblage entre les clips et les attaches orthodontiques respectives. De préférence les clips sont orientés dans le prolongement longitudinal des attaches respectives. Cela facilite à postériori le contrôle de l'implantation précise des attaches orthodontiques sur l'arcade dentaire.

Selon l'invention, le procédé de fabrication consiste ensuite à positionner virtuellement des gouttières unitaires en fonction du positionnement virtuel des clips, lesdites gouttières unitaires comprenant chacune une portion centrale et deux portions latérales que l'on positionne selon une orientation prédéfinie par rapport à la position virtuelle des clips respectifs. Cela permet de standardiser l'assemblage des clips sur les gouttières unitaires et facilite en outre le positionnement virtuel desdites gouttières unitaires.

Selon l'invention, le procédé de fabrication consiste ensuite à positionner virtuellement les négatifs des parties occlusales des dents sur les portions centrales respectives en considération de l'orientation desdites portions centrales.

Selon l'invention, le procédé de fabrication consiste ensuite, voire concomitamment à l'étape précitée, à prolonger latéralement les portions latérales sur les gouttières unitaires et à interconnecter entre elles les parties communes de deux portions latérales attenantes appartenant respectivement à deux gouttières unitaires adjacentes, en sorte de constituer virtuellement une gouttière globale. Cela permet de concevoir une gouttière globale de transfert.

Le procédé de fabrication selon l'invention permet au praticien de vérifier la conception virtuelle du dispositif de collage d'attaches orthodontiques en vérifiant l'implantation virtuelle desdites attaches orthodontiques sur un ordinateur. Lorsque le praticien souhaite modifier la position d'implantation d'une voire de plusieurs attaches orthodontiques, le concepteur orthodontiste n'a alors, grâce au procédé de fabrication et à la conception du dispositif objets de l'invention, qu'à modifier l'orientation de la ou des gouttières unitaires concernées et à refaire le ou les négatifs desdites gouttières unitaires, sans modifier le reste de la conception du dispositif objet de l'invention.

Selon l'invention, le procédé de fabrication consiste enfin à réaliser physiquement au moins la gouttière globale à partir des données virtuelles obtenues par le biais des étapes précédentes. En effet, la standardisation des clips, lorsque ceux-ci sont détachables des gouttières unitaires, permet éventuellement leur fabrication en série de manière indépendante de la gouttière globale.

Selon une mise en oeuvre du procédé de fabrication d'un dispositif de collage d'attaches orthodontiques objet de l'invention, celle-ci consiste à orienter la portion centrale de chaque gouttière unitaire perpendiculairement par rapport au clip respectif. Dans une réalisation, les portions latérales sont également disposées perpendiculairement par rapport au clip respectif.

Selon une variante de mise en oeuvre du procédé de fabrication d'un dispositif de collage d'attaches orthodontiques objet de l'invention, celle-ci consiste à positionner la portion centrale de chaque gouttière unitaire par rapport à chaque clip respectif et, à ajuster l'angle d'orientation des portions latérales par rapport à la portion centrale de chaque gouttière unitaire jusqu'à ce que les portions latérales attenantes de deux gouttières adjacentes soient disposées de manière coaxiale l'une vis-à-vis de l'autre. Cela permet d'interconnecter les portions latérales attenantes des gouttières adjacentes sur toute leur section commune et confondue.

Selon une mise en oeuvre préférentielle du procédé de fabrication d'un dispositif de collage d'attaches orthodontiques objet de l'invention, celui-ci consiste à réaliser physiquement au moins la gouttière globale par un procédé de prototypage rapide du type impression en trois dimensions. Cela facilite la conception réelle dudit dispositif de collage d'attaches orthodontiques objet de l'invention. On pourrait toutefois envisager d'autres techniques de fabrication du dispositif de collage d'attaches orthodontiques, comme par exemple des techniques de moulage ou des techniques d'usinage à commande numérique, à partir des données virtuelles dudit dispositif de collage d'attaches orthodontiques.

Les caractéristiques objets de l'invention apparaîtront à la lecture de la description suivante d'un mode préférentielle de conception. Cette description s'appuie sur des figures, parmi lesquelles :
- Les figures 1 et 2 illustrent deux vues en perspective, la première de face et la seconde plongeant par le dessus, du dispositif de collage d'attaches orthodontiques objet de l'invention mis en position sur une arcade dentaire ;
- Les figures 3A, 3B, 3C et 3D illustrent selon différents angles de vue, un module constitué d'une gouttière unitaire, d'un clip et d'une attache orthodontique ;
- Les figures 4A, 4B, 4C, 4D et 4E illustrent selon différents angles de vue, une gouttière unitaire ;
- Les figures 5A, 5B, 5C et 5D illustrent selon différents angles de vue, un clip ;
- Les figures 6 et 7 illustrent une variante de conception d'un système d'encliquetage entre une gouttière unitaire et un clip,
- Les figures 8 à 10 illustrent une autre variante de conception d'un système d'encliquetage entre un clip et une gouttière unitaire, ainsi qu'une variante de moyens d'assemblage en liaison pivot entre le clip et la gouttière unitaire,
- La figure 11 illustre une variante de mise en oeuvre du dispositif de collage d'attaches orthodontiques, en ce qui concerne l'orientation des portions latérales des gouttières unitaire et l'interconnexion entre les portions latérales attenantes de deux gouttières unitaires adjacentes.

Dans la suite de la description, les mêmes références seront utilisées pour définir les mêmes éléments du dispositif de collage d'attaches orthodontiques, selon les diverses variantes décrites.

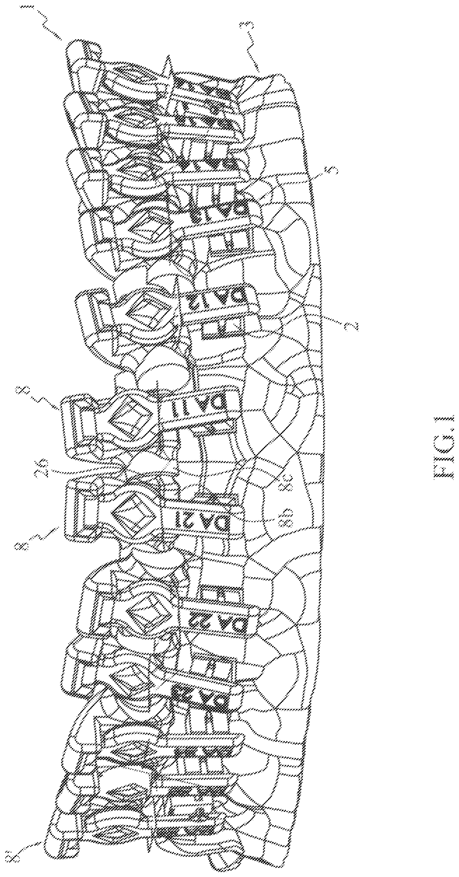

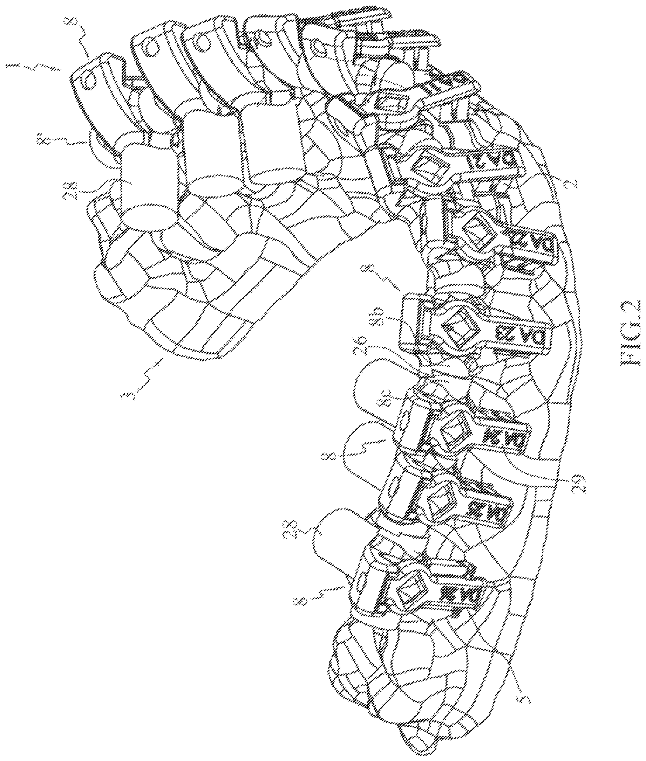

Sur les figures 1 et 2 est illustré un dispositif 1 de collage d'attaches orthodontiques 2. Le dispositif 1 est mis en place sur une arcade dentaire 3. Sur ces figures 1 et 2, est illustrée une arcade dentaire 3 d'une arcade maxillaire. On pourrait bien entendu concevoir le dispositif 1 objet de la présente invention pour une arcade mandibulaire. En outre le dispositif 1 est conçu pour un collage d'attaches orthodontiques 2 sur la face vestibulaire de dents de l'arcade dentaire 3. On pourrait de même concevoir le dispositif 1, objet de l'invention, pour un collage d'attaches orthodontiques sur la face linguale des dents de l'arcade dentaire 3.

Cette arcade dentaire 3 est une représentation virtuelle de l'arcade dentaire d'un patient. Cette arcade dentaire 3 virtuelle est obtenue par exemple en prenant une empreinte optique de l'arcade dentaire, dans quel cas les données virtuelles de celle-ci sont directement transmises à un ordinateur équipé d'un logiciel adapté de conception assistée, permettant de visualiser l'arcade dentaire 3 virtuelle. Dans une variante, le praticien peut procéder à une empreinte à l'alginate ou en silicone, de l'arcade dentaire puis numériser dans un second temps cette empreinte afin de disposer des données virtuelles de l'arcade dentaire. Cette arcade dentaire 3 est ensuite visualisable sur un ordinateur, par le biais d'un logiciel de conception assistée.

A partir de ces données de l'arcade dentaire 3 virtuelle, le praticien peut alors positionner, de manière virtuelle, les attaches sur les dents. Le praticien aura choisi au préalable le type d'attache orthodontique qu'il souhaite poser selon une gamme de produit standardisée et en fonction des dents sur lesquelles lesdites attaches orthodontiques doivent être posées.

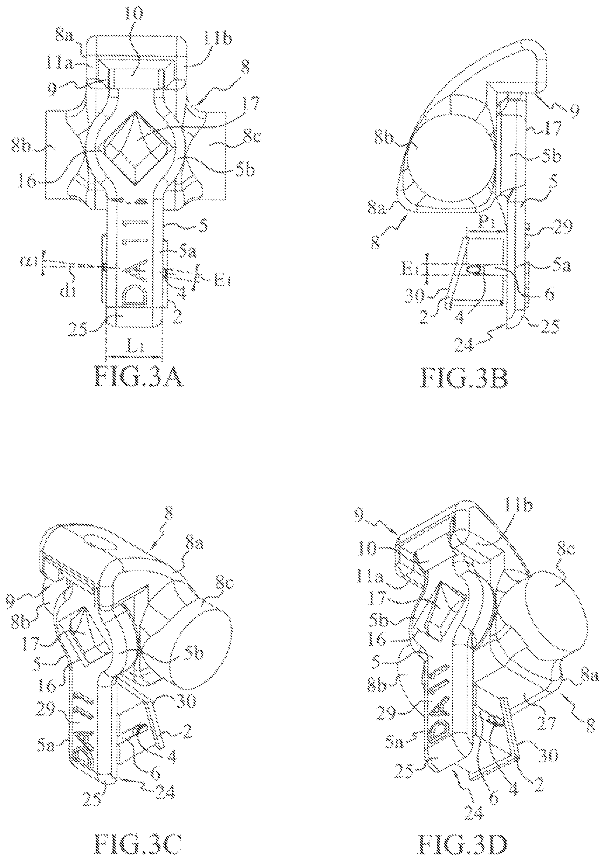

Dans l'exemple illustré, on constate notamment en regard des figures 1, 2, 3A à 3D, que l'attache orthodontique 2 comprend une gorge 4 qui présente une certaine profondeur P₁, une certaine largeur L₁, une certaine épaisseur E₁ et une certaine inclinaison α₁ par rapport à une droite d₁ perpendiculaire au sens longitudinal de ladite attache orthodontique 2, tel qu'illustré sur la figure 3A. Ces différentes dimensions P₁, L₁, E₁ et α₁ varient selon l'attache orthodontique 2 en question, c'est-à-dire en fonction de la dent sur laquelle celle-ci est destinée à être collée.

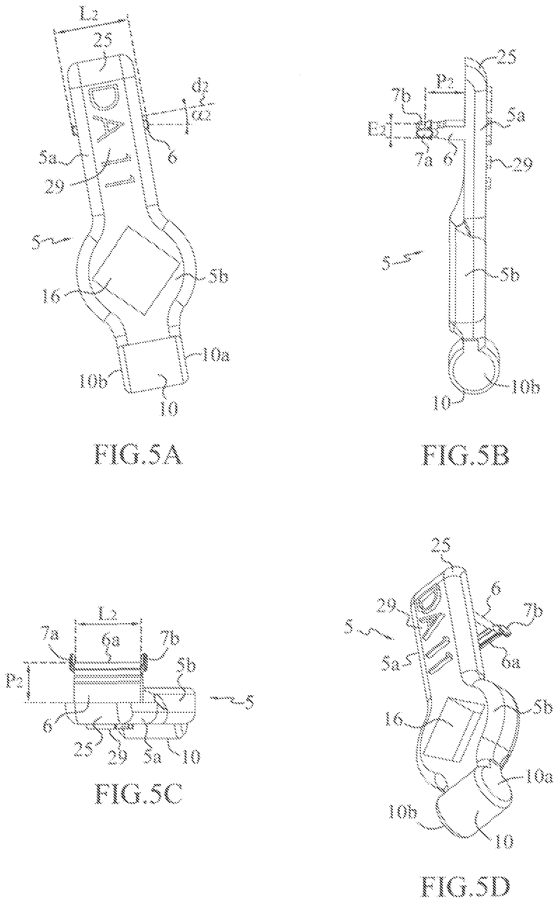

On constate sur les figures 1, 2, 3A à 3D que ces attaches orthodontiques 2 sont connectées à des clips 5 par le biais de moyens d'assemblage constitués d'une patte d'assemblage 6. Comme illustré sur les figures, les clips 5 présentent une forme longitudinale. On constate sur les figures 3A à 3D et 5A à 5D que la patte d'assemblage 6 est disposée dans la partie distale 5a du clip 5 et présente une profondeur P₂, une largeur L₂, une épaisseur E₂ et une inclinaison α₂ par rapport à une droite d₂ perpendiculaire au sens longitudinal dudit clip 5.

Les dimensions P₁, L₁, E₁ de la gorge 4 et les dimensions P₂, L₂, E₂ de la patte d'assemblage 6 sont configurées pour permettre un emboitement ajusté de ladite patte d'assemblage 6 dans ladite gorge 4 en assurant une parfaite rétention de l'attache orthodontique 2 assemblée sur le clip 5. On constate en outre sur les figures 5A à 5D que la patte d'assemblage 6 comprend à son extrémité distale 6a deux butées latérales 7a, 7b distantes l'une de l'autre d'une largeur très légèrement supérieure à la largeur Li de l'attache orthodontique 2. Lorsque la patte d'assemblage 6 est emboitée dans la gorge 5, ces butées latérales 7a, 7b sont positionnées sur les côtés latéraux 8a, 8b de l'attache orthodontique 2, comme illustré sur les figures 3A à 3D, notamment. Cela permet d'immobiliser latéralement l'attache orthodontique 2 assemblée sur le clip 5.

Cette conception des moyens d'assemblage entre l'attache orthodontique 2 et le clip 5 permet de détacher en outre facilement le clip 5 une fois que l'attache orthodontique 2 est collée sur la dent.

L'angle d'inclinaison α₁ de la gorge 5 et l'angle d'inclinaison α₂ de la patte d'assemblage 6 prédéfinissent une orientation du clip 5 par rapport à l'attache orthodontique 2. De préférence, ces angles d'inclinaison α_{1 et} α₂ sont égaux, ce qui permet de définir une orientation du clip 5 dans le prolongement longitudinal de l'attache orthodontique 2. Cela facilite la validation du positionnement des attaches orthodontiques 2 sur les dents de l'arcade dentaire 3 virtuelle par le praticien. Cette orientation prédéfinie entre le clip 5 et l'attache orthodontique 2 permet de standardiser la conception des moyens d'assemblage sur le clip 5 qui dépend tout de même de la conception des moyens d'assemblage complémentaire mis en oeuvre sur l'attache orthodontique 2. Ainsi, pour une attache orthodontique 2 adaptée à un type de dent, le clip 5 sera de conception similaire quelle que soit l'arcade dentaire d'un patient.

On comprend en outre que lorsque le praticien a positionné les attaches orthodontiques 2 sur les dents de l'arcade dentaire 3, celui peut positionner facilement les clips 5 sur chacune desdites attaches orthodontiques 2, en tenant compte de l'orientation prédéfinie entre lesdits éléments. Dans ce cas préférentiel, le praticien positionne les clips 5 dans les prolongements longitudinaux des attaches orthodontiques 2, tel que cela apparaît sur les figures 1, 2, 3A à 3D.

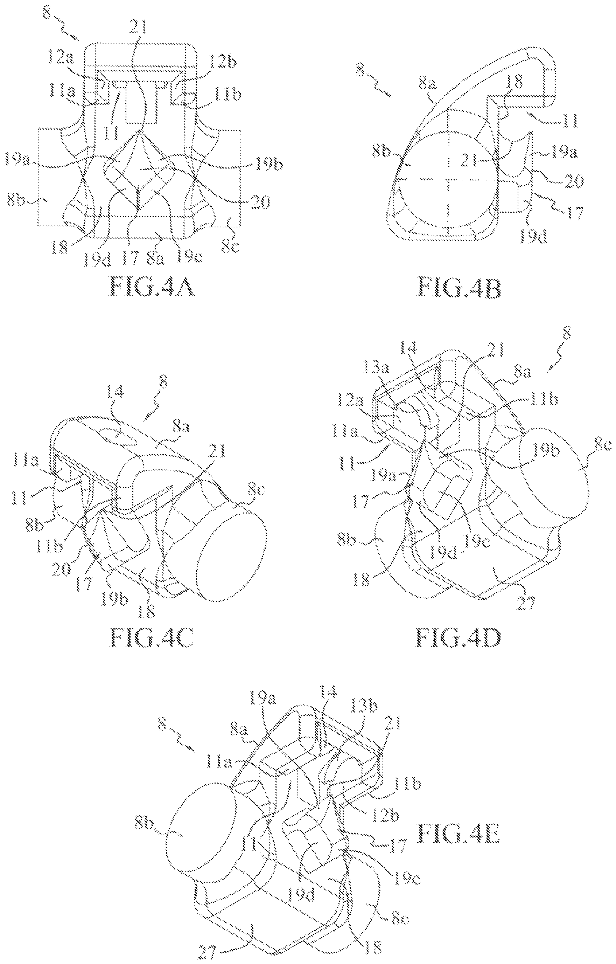

Tel qu'illustré sur les figures 3A à 3D, le clip 5 est assemblé dans sa partie proximale 5b, avec une gouttière unitaire 8. La gouttière unitaire 8 comprend une portion centrale 8a et deux portions latérales 8b, 8c, tel qu'illustré sur les figures 4A à 4E. Selon cette conception préférentielle, une liaison pivot 9 est agencée entre l'extrémité proximale 5b du clip 5 et la portion centrale 8a, tel qu'illustré sur les figures 3A à 3D. Pour cela, l'extrémité proximale du clip 5 comprend un tronçon cylindrique 10, illustré sur les figures 5A à 5D. En outre, la portion centrale 8a de la gouttière unitaire 8 comprend une zone de logement 11, illustrée sur les figures 4A à 4E. Cette zone de logement 11 comprend deux faces latérales 11a, 11b qui comprennent chacune sur leur côté intérieur 12a, 12b, une zone de réception 13a, 13b semi-cylindrique, illustrée sur les figures 4D et 4E, de diamètre adapté au diamètre des extrémités latérale 10a, 10b du tronçon cylindrique. Cette configuration permet, d'une part, d'engager les extrémités latérales 10a, 10b tronçon cylindrique 10 respectivement dans les zones de réception 13a, 13b semi-cylindrique de la zone de logement 11 et ainsi de constituer ladite liaison pivot 9. D'autre part, cette conception permet de dégager le tronçon cylindrique 10 de la zone de logement 11. Ainsi on réalise un assemblage temporaire ou amovible entre le clip 5 et la gouttière unitaire 8.

On constate sur les figures 3C, 4C à 4E, notamment, que la zone de logement 11 comprend un trou d'évacuation 14 qui permet de laisser s'échapper l'air lors du positionnement du tronçon cylindrique 10 dans ladite zone de logement 11 en sorte de faciliter l'assemblage du clip 5 avec la gouttière unitaire 8.

Cet assemblage en liaison pivot 9 entre le clip 5 et la gouttière unitaire 8 permet de prédéfinir l'orientation entre lesdits éléments. De préférence, cette liaison pivot 9 est agencée pour que la portion centrale 8a et les deux portions latérales 8b, 8c constituant ladite gouttière unitaire 8, soient orientées perpendiculairement au sens longitudinal du clip 5. On pourrait toutefois définir une autre orientation angulaire entre lesdits éléments. Cette conception permet de prédéfinir les moyens d'assemblage entre le clip 5 et la gouttière unitaire 8. On comprend donc à la lecture de ce qui précède, que le clip 5 peut être complètement standardisé et directement transmis au praticien, indépendamment de la gouttière unitaire 8. Il en est de même pour l'attache orthodontique 2.

Cet assemblage en liaison pivot 9 permet de faire pivoter le clip 5 et l'attache orthodontique 2, par rapport à la gouttière unitaire 8, dans une première position selon laquelle ladite attache orthodontique est distante de la dent, lorsque le dispositif 1 objet de l'invention est en position sur l'arcade dentaire 3. Au contraire, le clip 5 et l'attache orthodontique 2 peuvent pivoter par rapport à la gouttière unitaire 8, dans une seconde position illustrée sur les figures 1, 2 et 3A à 3D, selon laquelle ladite attache orthodontique 2 est collée sur la dent, lorsque le dispositif 1 objet de l'invention est en position sur l'arcade dentaire 3.

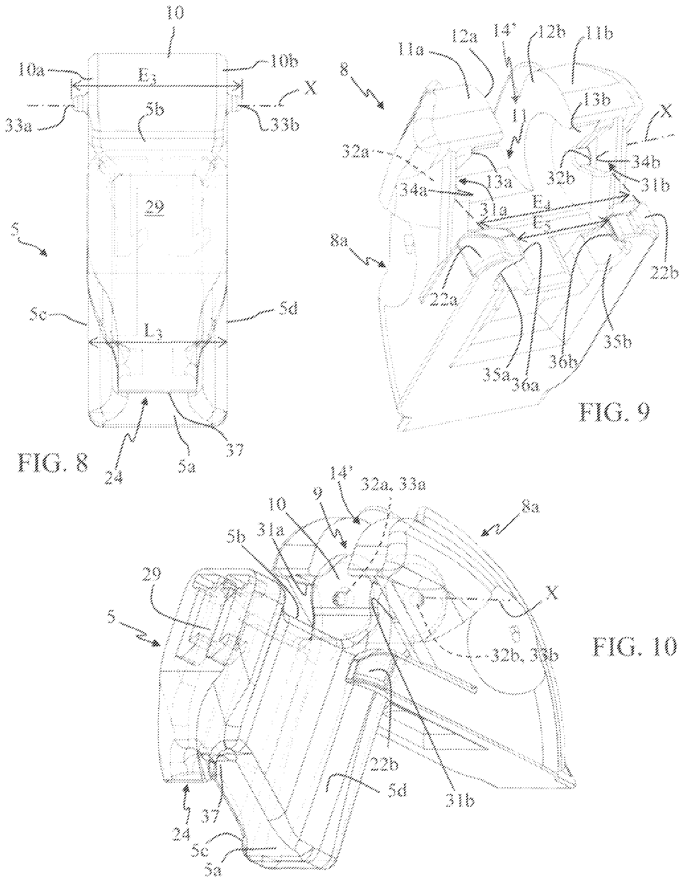

Sur les figures 8 à 10, on retrouve des moyens d'assemblage en liaison pivot 9 tel que décrit précédemment pour le mode de réalisation des figures 3A à 3D et 4A à 4E. En outre, seule la portion centrale 8a de la gouttière unitaire 8 est illustrée. Ainsi, la portion centrale 8a de la gouttière unitaire 8 comprend une zone de logement 11 qui comporte deux faces latérales 11a, 11b munies chacune sur leur côté intérieur 12a, 12b d'une zone de réception 13a, 13b semi-cylindrique, de diamètre adapté au diamètre des extrémités latérale 10a, 10b du tronçon cylindrique 10 agencé en partie proximale 5b du clip 5. On constate sur les figures 9 et 10, que les zones de réception 13a, 13b comprennent chacune une rainure de guidage 31a, 31b de forme conique qui se termine chacune par un trou 32a, 32b de forme cylindrique. Ces trous 32a, 32b sont disposés en regard selon l'axe des zones semi-cylindriques 13a, 13b correspondant à l'axe X de la liaison pivot 9 entre le clip 5 et la gouttière 8. De même, on constate sur les figures 8 et 10 que les extrémités latérales 10a, 10b du tronçon cylindrique 10 comprennent chacune une protubérance 33a, 33b de forme cylindrique de diamètre légèrement inférieur au diamètre des trous 32a, 32b. Ces protubérances 33a, 33b sont disposés selon un même axe correspondant à l'axe de pivotement X de la liaison pivot 9 entre le clip 5 et la gouttière 8. En outre, l'écartement E₃ entre les protubérances 33a, 33b, tel qu'illustré en figure 8, est légèrement supérieur à l'écartement E₄ entre les deux fonds 34a, 34b des rainures de guidage 31a, 31b, tel qu'illustré en figure 9. Ainsi, lors de l'insertion du clip 5 dans la zone de logement 11, les rainures de guidage 31a, 31b facilitent le guidage des protubérances 33a, 33b jusque dans les trous 32a, 32b. En outre le patricien enfonce les protubérances 33a, 33b dans ces rainures 31a, 31b du fait de la différence entre les écartements E₃, E₄. L'élasticité de la matière du clip 5 et de la gouttière 8 permet donc d'encliqueter les protubérances 33a, 33b dans ces trous 32a, 32b. En tirant en sens inverse le clip 5 hors de la gouttière 8, le praticien peut décliqueter facilement les protubérances 33a, 33b des trous 32a, 32b et les extraire des rainures de guidage 31a, 31b.

On constate sur les figures 9 et 10 la présence d'une ouverture 14' dans la zone de logement 11 qui permet d'évacuer l'air lors de l'introduction du tronçon cylindrique 10 dans cette zone de logement 11 en sorte de faciliter l'assemblage entre lesdits éléments.

On constate sur les figures 3A à 3D, la présence d'un système d'encliquetage 15 agencé entre la partie proximale 5b du clip 5 et la portion centrale 8a de la gouttière unitaire 8. Pour cela, la partie proximale 5b du clip 5 comprend un orifice 16 qui présente une forme en losange vue de face, tel qu'illustré en figure 5A. Cette orifice 16 étant débouchant, celui-ci ressemble donc à un parallélépipède losange, encore appelé rhomboèdre, tel qu'apparaissant en figure 5D. En outre, la portion centrale 8a de la gouttière unitaire 8 comprend une protubérance 17 qui comprend également une forme ressemblant à un parallélépipède losange, tel qu'illustré sur les figures 4A à 4E, complémentaire à celle de l'orifice 16. Cette protubérance 17 est agencée sur la face avant 18 plane de la portion centrale 8a, en dessous de la zone de logement 11, tel qu'illustré sur ces figures 4A à 4E. La protubérance 17 coïncide avec l'orifice 16, lors du pivotement du clip 5 vers sa seconde position sur la gouttière unitaire 8. On constate sur les figures 5A à 5E que la protubérance 17 comprend des arêtes 19a, 19b, 19c et 19d au niveau de la base 20 en losange qui sont arrondies, ce qui facilite l'introduction de la protubérance 17 dans l'orifice 16. Par ailleurs, cette protubérance 17 comprend un bec 21, tel qu'illustré sur les figures 4A à 4E. Ce bec 21 constitue une butée contre l'orifice 16 lorsque le clip 5 tend à pivoter de sa première position vers sa seconde position vis-à-vis de la gouttière unitaire 8. Cette butée peut être franchie grâce à une action manuelle du praticien qui contraint l'orifice 16 à s'encliqueter sur la protubérance 17. Dans cette position, l'attache orthodontique 2 vient en appui contre la dent, pour son collage. Inversement, la forme du bec 21, incurvée, permet de maintenir encliqueté l'orifice 16 sur la protubérance 17, lorsque le clip 5 est pivoté dans sa seconde position vis-à-vis de la gouttière unitaire 8, comme illustré notamment sur les figures 3A à 3D. Une action manuelle du praticien est nécessaire pour débloquer le clip 5 de la gouttière unitaire 8 et le faire pivoter dans sa première position. Dans cette position, le clip 5 est détaché de l'attache orthodontique 2, laquelle est restée collée à la dent.

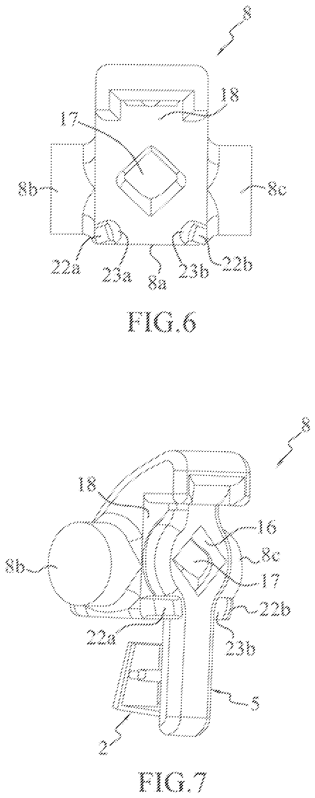

Tel qu'illustré sur les figures 6 et 7, on peut également prévoir, en variante ou en complément, deux branches latérales 22a, 22b qui s'étendent perpendiculairement à la face avant 18 sur la portion centrale 8a de la gouttière unitaire 8. Ces branches latérales 22a, 22b comprennent chacune un bourrelet 23a, 23b, ces bourrelets 23a, 23b constituant des butées sur le clip 5, lorsque l'on tend à pivoter ledit clip 5 de sa première position vers sa seconde position. Ces branches latérales 22a, 22b sont flexibles, ce qui permet au praticien d'exercer une action manuelle en sorte de contraindre le clip à passer lesdits bourrelets 23a, 23b et à s'encliqueter sur la gouttière unitaire 8. Dans cette position, l'attache orthodontique 2 vient en appui contre la dent, pour son collage. Ces bourrelets 23a, 23b maintiennent ensuite le clip 5 dans sa seconde position, encliqueté sur la gouttière unitaire. Une action manuelle du praticien permet alors de fléchir les branches latérales 22a, 22b et d'écarter les bourrelets 23a, 23b d'une largeur supérieure à celle du clip 5, en sorte de pivoter le clip 5 de sa seconde position vers sa première position. Dans cette position, le clip 5 est détaché de l'attache orthodontique 2, laquelle est restée collée à la dent.

On retrouve également sur la variante illustrée en figures 8 à 10, un système d'encliquetage 15 qui comprend uniquement de branches latérales 22a, 22b qui sont flexibles et comprennent chacune une échancrure 35a, 35b de forme semi-cylindrique, tel qu'illustré en figure 9. Ces échancrures 35a, 35b sont disposées en vis-à-vis. Les bords latéraux 5c, 5d du clip 5 présentent une forme semi-cylindrique de diamètre légèrement inférieur au diamètre des échancrures 35a, 35b. En outre, la largeur L₃ séparant les bords latéraux 5c, 5d du clip 5, tel qu'illustré en figure 8, est légèrement supérieure à l'écartement E₅ séparant les bords internes 36a, 36b des branches latérales 22a, 22b, tel qu'illustré en figure 9. Ainsi, lorsque le praticien pivote le clip 5 sur la portion centrale 8a de la gouttière 8, les bords latéraux 5c, 5d restent en butée contre les branches latérales 22a, 2b. En forçant le pivotement, l'élasticité des branches latérale 22a, 22b et du clip 5 permet l'encliquetage des bords latéraux 5c, 5d dans les échancrures 35a, 35b, comme illustré en figure 10. Cette position demeure tant que le praticien n'exerce pas un effort de pivotement en sens inverse sur le clip 5.

Pour faciliter la manipulation du clip 5, celui-ci comprend une zone de préhension 24 telle qu'illustrée sur les figures 3A à 3D, notamment. Cette zone de préhension 24 est constituée par l'extrémité distale 25 du clip 5. En effet, la partie distale 5a du clip 5 est dimensionnée de telle sorte que, lorsque l'attache orthodontique 2 est assemblée sur la patte d'assemblage 6, l'extrémité distale 25 du clip 5 peut être saisie avec les doigts par le praticien. Sur la variante illustrée en figures 8 et 10, la zone de préhension 24 comprend une partie recourbée 37 vers l'arrière qui est configurée pour recevoir l'extrémité d'un doigt du praticien.

Comme on le constate sur les figures 1 et 2, le dispositif 1 objet de l'invention est constitué d'un ensemble de gouttière unitaire 8, recevant chacune un clip 5 qui reçoit lui-même une attache orthodontique 2 adaptée à la dent sur laquelle ladite attache orthodontique 2 est collée. Comme on peut le constater sur ces figures 1 et 2, le positionnement virtuel des attaches orthodontiques 2 définit le positionnement virtuel des gouttières unitaires 8, étant donné que les orientations entre les attaches orthodontiques 2 et les clips 5, d'une part, et entre les clips 5 et les gouttières unitaires 8, d'autre part, sont prédéfinies. Lorsque toutes les positions des attaches orthodontiques 2, et par conséquent des gouttières unitaires 8, sont validées, on étend les portions latérales 8b, 8c de chaque gouttière unitaire 8 et on procède à une interconnexion entre les parties communes 26 des portions latérales 8b, 8c attenantes des gouttières unitaires 8 adjacentes les unes aux autres. Ces interconnexions entre les gouttières unitaires 8 permettent ainsi de constituer une gouttière globale 8'.

Ces positions virtuelles des gouttières unitaires 8, validées au préalable par le praticien, permettent en outre de créer virtuellement les négatifs sur les faces inférieures 27 des portions centrales 8a. Cette face inférieure 27 est illustrée sur les figures 3D et 4D, par exemple.

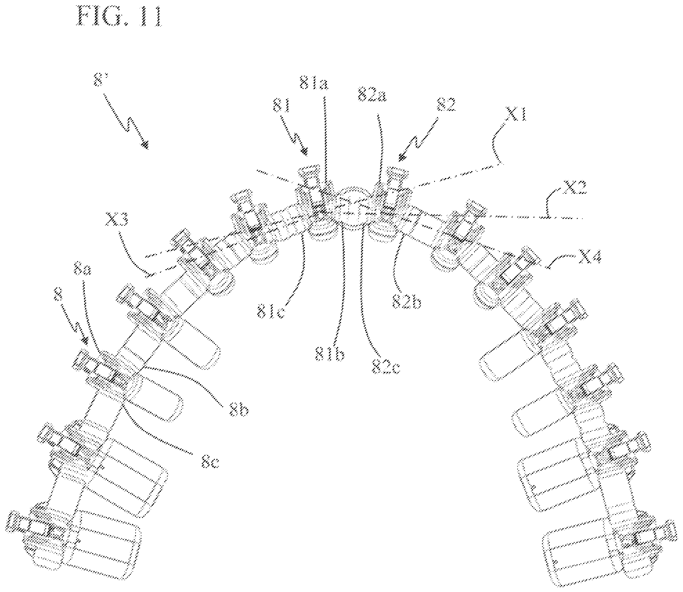

Dans la variante illustrée en figure 11, on constate que la portion centrale 81a d'une gouttière unitaire 81 présente un axe transversal X1. Les portions latérales 81b, 81c de cette gouttière unitaire 81 s'étendent selon deux axes X2, X3 qui présentent une orientation qui peut être confondue ou au contraire différente de l'axe transversal X1. De même, la gouttière unitaire 82 adjacente à la précédente gouttière unitaire 81 comprend un axe transversal X4. On constate sur la figure 11 que la portion latérale 82c de cette gouttière unitaire 82 adjacente est orientée selon le même axe X2 que la portion latérale 82b attenante à celle-ci, cet axe X2 pouvant être confondu ou orienté différemment de l'axe transversal X4 de cette gouttière unitaire 82 adjacente. Cette conception permet de joindre les portions latérales 81b, 82c attenantes selon une section commune, étant donné que ces portions latérales 81b, 82c attenantes se confondent. Il en est de même entre toutes les portions latérales attenantes des gouttières unitaires adjacentes constituant la gouttière globale 8'. Comme pour la précédente variante de conception illustrée en figures 1 et 2, le positionnement virtuel des attaches orthodontiques 2 conditionne le positionnement des clips 5 et, par conséquent, le positionnement des portions centrales 8a des gouttières unitaires 8. Une fois la position des portions centrales 8a validée, le praticien créé les négatifs sur les faces inférieures de ces portions centrales 8a. En outre, le praticien modifie virtuellement l'orientation des portions latérales 8b, 8c des gouttières unitaires 8 pour que les portions latérales 81b, 82c attenantes des gouttières unitaires adjacentes 81, 82 soit disposées de manière coaxiale selon un même axe X2. Le praticien reproduit cette opération entre les gouttières unitaires adjacentes entre elles.

Cette gouttière globale 8', constituée d'une interconnexion de gouttières unitaires 8, est réalisée dans une matière sécable. De préférence on réalise la gouttière dans une résine à base de polypropylène, au moyen d'un procédé de prototypage rapide mis en oeuvre avec une imprimante en trois dimensions. Cette conception dans une matière sécable présente pour intérêt de pouvoir sectionner les gouttières unitaires 8 dans leur partie commune 26, afin de les séparer les unes des autres lorsqu'il est nécessaire de procéder à un recollage à postériori d'une des attaches orthodontiques 2.

On constate sur les figures 1 et 2 que les gouttières unitaires 8 situées sur les côtés latéraux et destinée à coller des attaches orthodontiques 2 sur les dents multi-cuspidées, c'est-à-dire les prémolaires et les molaires, comprennent chacune une extension 28 qui s'étend dans la direction palatine en sorte de faciliter le repositionnement d'une telle gouttière unitaire 8 lors d'un recollage éventuel à postériori.

On constate sur les figures 1, 2, 3A à 3D et 5A à 5D que le clip 5 comprend une zone de marquage 29, constituée de préférence par la face avant de la partie distale 5a dudit clip 5. Cette zone de marquage 29 permet la réception d'une référence au clip 5, comme illustré sur les figures, qui est fonction de l'attache orthodontique 2 et de la dent sur laquelle ladite attache orthodontique doit être collée. Une telle zone de marquage 29 apparaît également sur les figures 8 et 10 de la variante de conception.

Le collage des attaches orthodontiques 2 sur les dents comprend une étape de dépose de résine de collage sur la face 30 des attaches orthodontiques 2 venant au contact des dents. Cette dépose de résine est réalisée pour toutes les attaches orthodontiques 2. Dans une étape suivante, on positionne la gouttière globale 8' sur l'arcade dentaire 3 du patient, les clips 5 étant disposés dans leur première position vis-à-vis des gouttières unitaires 8. Dans une étape suivante, on encliquète les clips 5 sur les gouttières unitaires 8 en forçant manuellement lesdits clips 5 à pivoter dans leur seconde position vis-à-vis desdites gouttières unitaires 8. Une fois le collage des attaches orthodontiques 2 réalisé, on force manuellement les clips 5 à pivoter dans leur première position par rapport aux gouttières unitaires 8 respectives, ce qui permet de détacher simultanément les clips 5 vis-à-vis des attaches orthodontiques 2. On retire enfin la gouttière globale 8' de l'arcade dentaire 3.

L'assemblage temporaire entre le clip 5 et la gouttière unitaire 8, d'une part, et l'assemblage temporaire entre le clip 5 et l'attache orthodontique 2, d'autre part, permettent tout d'abord de déposer la résine sur la face 30 de l'attache orthodontique 2 et ensuite d'assembler le clip 5 avec la gouttière unitaire 8 en le disposant dans sa première position sur la gouttière unitaire 8. Une fois tous les clips 5 assemblés avec les gouttières unitaires 8, on place la gouttière globale 8' sur l'arcade dentaire 3.

D'autres caractéristiques peuvent être envisagées dans le cadre de l'invention. On peut notamment prévoir des variantes de conception de moyens de liaison et de système d'encliquetage entre le clip 5 et la gouttière unitaire 8. On peut également prévoir des variantes de conception des moyens d'assemblage entre le clip 5 et l'attache orthodontique 2. Toujours en conservant une orientation prédéfinie entre le clip 5 et la gouttière unitaire 8, d'une part, et entre le clip 5 et l'attache orthodontique 2, d'autre part.

Dans la description qui précède de diverses variantes de conception, le système d'encliquetage est mis en oeuvre entre chaque clip et chaque gouttière unitaire 8 respective. Un tel système d'encliquetage, voire des variantes de conception présentant les mêmes fonctions, pourrait toutefois être agencé directement entre chaque clip et une gouttière globale.

## Revendications

1. Procédé de fabrication d'un dispositif (1) de collage d'attaches orthodontiques (2) comprenant une première étape de récupération des données virtuelles d'une arcade dentaires (3) d'un patient et, une seconde étape de positionnement virtuel des attaches orthodontiques sur les dents de l'arcade dentaire, ledit procédé consiste ensuite à mettre en oeuvre au moins les étapes suivantes :
- positionner virtuellement des clips (5) en fonction du positionnement virtuel des attaches orthodontiques et en orientant lesdits clips avec une position prédéfinie vis-à-vis desdites attaches respectives ;
- positionner virtuellement des gouttières unitaires (8) en fonction du positionnement virtuel des clips, lesdites gouttières unitaires comprenant chacune une portion centrale (8a) et deux portions latérales (8b) qui s'étendent selon une orientation prédéfinie par rapport à la position virtuelle des clips respectifs ;
- positionner virtuellement les négatifs des parties occlusales des dents sur les portions centrales (8a) respectives en considération de l'orientation desdites portions centrales ;
- prolonger latéralement les portions latérales (8b, 8c) sur les gouttières unitaires et interconnecter entre elles les parties communes (26) de deux portions latérales attenantes appartenant respectivement à deux gouttières unitaires adjacentes, en sorte de constituer virtuellement une gouttière globale (8') ;
- réaliser physiquement au moins la gouttière globale à partir des données virtuelles obtenues.

2. Procédé de fabrication d'un dispositif (1) de collage d'attaches orthodontiques (2) selon la revendication 1, dans lequel on oriente les portions latérales (8b, 8c, 81b, 81c, 82b, 82c) vis-à-vis des portions centrales (8a, 81a, 82a) sur les gouttières unitaires (8, 81, 82) pour que les portions latérales attenantes (81b, 82c) de deux gouttières unitaires adjacentes (81, 82) soient positionnées de manière coaxiales l'une vis-à-vis de l'autre.

3. Procédé de fabrication d'un dispositif (1) de collage d'attaches orthodontiques (2) selon l'une des revendications 1 ou 2, dans lequel on oriente les clips (5) dans le prolongement longitudinal des attaches orthodontiques respectives.

4. Procédé de fabrication d'un dispositif (1) de collage d'attaches orthodontiques (2) selon l'une des revendications 1 à 3, dans lequel on oriente la portion centrale (8a) de la gouttière unitaire (8) perpendiculairement par rapport au clip (5) respectif.

5. Procédé de fabrication d'un dispositif (1) de collage d'attaches orthodontiques (2) selon l'une des revendications 1 à 4, dans lequel on réalise physiquement au moins la gouttière globale (8') par un procédé de prototypage rapide du type impression en trois dimensions.

## Patentansprüche

1. Verfahren zur Herstellung einer Vorrichtung (1) zum Kleben von orthodontischen Brackets (2), umfassend einen ersten Schritt des Gewinnens der virtuellen Daten eines Zahnbogens (3) eines Patienten, und einen zweiten Schritt des virtuellen Positionierens von orthodontischen Brackets an den Zähnen des Zahnbogens, wobei das Verfahren anschließend darin besteht, mindestens die folgenden Schritte umzusetzen:
- virtuelles Positionieren der Clips (5) abhängig von der virtuellen Positionierung der orthodontischen Brackets und unter Ausrichten der Clips mit einer vordefinierten Position gegenüber den jeweiligen Brackets;
- virtuelles Positionieren der Einzelschienen (8) abhängig von der virtuellen Positionierung der Clips, wobei die Einzelschienen jede einen mittleren Abschnitt (8a) und zwei seitliche Abschnitte (8b) umfassen, die sich in Bezug auf die virtuelle Position der jeweiligen Clips in einer vordefinierten Ausrichtung erstrecken;
- virtuelles Positionieren der Negative der Okklusalteile der Zähne an den jeweiligen mittleren Abschnitten (8a) unter Beachtung der Ausrichtung der mittleren Abschnitte;
- seitliches Verlängern der seitlichen Abschnitte (8b, 8c) an den Einzelschienen, und Verbinden der gemeinsamen Teile (26) von zwei aneinandergrenzenden seitlichen Abschnitten, die jeweils zu zwei benachbarten Einzelschienen gehören, miteinander, um virtuell eine Gesamtschiene (8') aufzubauen;
- physisches Anfertigen von mindestens der Gesamtschiene auf Grundlage der erhaltenen virtuellen Daten.

2. Verfahren zur Herstellung einer Vorrichtung (1) zum Kleben von orthodontischen Brackets (2) nach Anspruch 1, wobei die seitlichen Abschnitte (8b, 8c, 81b, 81c, 82b, 82c) gegenüber den mittleren Abschnitten (8a, 81a, 82a) an den Einzelschienen (8, 81, 82) so ausgerichtet werden, dass die aneinandergrenzenden seitlichen Abschnitte (81b, 82c) von zwei benachbarten Einzelschienen (81, 82) einander gegenüber koaxial positioniert sind.

3. Verfahren zur Herstellung einer Vorrichtung (1) zum Kleben von orthodontischen Brackets (2) nach einem der Ansprüche 1 oder 2, wobei die Clips (5) in der seitlichen Verlängerung der jeweiligen orthodontischen Brackets ausgerichtet werden.

4. Verfahren zur Herstellung einer Vorrichtung (1) zum Kleben von orthodontischen Brackets (2) nach einem der Ansprüche 1 bis 3, wobei der mittlere Abschnitt (8a) der Einzelschiene (8) in Bezug auf den jeweiligen Clip (5) senkrecht ausgerichtet wird.

5. Verfahren zur Herstellung einer Vorrichtung (1) zum Kleben von orthodontischen Brackets (2) nach einem der Ansprüche 1 bis 4, wobei mindestens die Gesamtschiene (8') über ein Rapid Prototyping-Verfahren vom Typ 3D-Druck physisch angefertigt wird.

## Claims

1. Method for producing a device (1) for bonding orthodontic brackets (2) comprising a first step of recovering virtual data from a dental arch (3) of a patient and, a second step of virtually positioning orthodontic brackets on the teeth of the dental arch, said method then consists of implementing at least the following steps:
- virtually positioning clips (5) according to the virtual positioning of the orthodontic brackets and by orienting said clips with a predefined position opposite said respective brackets;
- virtually positioning single splints (8) according to the virtual positioning of the clips, said single splints each comprising a central portion (8a) and two side portions (8b) which extend along a predefined orientation with respect to the virtual position of the respective clips;
- virtually positioning the negatives of the occlusal portions of the teeth on the respective central portions (8a), considering the orientation of said central portions;
- laterally extending the side portions (8b, 8c) on the single splints and interconnecting the common portions (26) of two adjacent side portions respectively belonging to two adjacent single splints together, so as to virtually constitute an overall splint (8');
- physically produce at least the overall splint from the virtual data obtained.

2. Method for producing a device (1) for bonding orthodontic brackets (2) according to claim 1, wherein the side portions (8b, 8c, 81b, 81c, 82b, 82c) are oriented opposite the central portions (8a, 81a, 82a) on the single splints (8, 81, 82) such that the adjacent side portions (81b, 82c) of two adjacent single splints (81, 82) are positioned coaxially opposite one another.

3. Method for producing a device (1) for bonding orthodontic brackets (2) according to one of claims 1 or 2, wherein the clips (5) are oriented in the longitudinal extension of the respective orthodontic brackets.

4. Method for producing a device (1) for bonding orthodontic brackets (2) according to one of claims 1 to 3, wherein the central portion (8a) of the single splint (8) is oriented perpendicularly with respect to the respective clip (5).

5. Method for producing a device (1) for bonding orthodontic brackets (2) according to one of claims 1 to 4, wherein at least the overall splint (8') is physically produced through a rapid prototyping method of the three-dimensional printing type.
